(19) **Europäisches Patentamt**
**European Patent Office**
**Office européen des brevets**

(11) **EP 1 692 629 B1**

(12) **EUROPEAN PATENT SPECIFICATION**

(45) Date of publication and mention
of the grant of the patent:
**08.06.2011 Bulletin 2011/23**

(51) Int Cl.:
***G06F 17/30*** (2006.01)

(21) Application number: **04799283.9**

(86) International application number:
**PCT/IB2004/052601**

(22) Date of filing: **30.11.2004**

(87) International publication number:
**WO 2005/055196 (16.06.2005 Gazette 2005/24)**

(54) **SYSTEM & METHOD FOR INTEGRATIVE ANALYSIS OF INTRINSIC AND EXTRINSIC AUDIO-VISUAL DATA**

SYSTEM UND VERFAHREN ZUR INTEGRIERTEN ANALYSE VON INTRINSISCHEN UND
EXTRINSISCHEN AUDIOVISUELLEN DATEN

SYSTEME ET PROCEDE D'ANALYSE INTEGRATIVE DE DONNEES AUDIOVISUELLES
INTRINSEQUES ET EXTRINSEQUES

(84) Designated Contracting States:
**AT BE BG CH CY CZ DE DK EE ES FI FR GB GR
HU IE IS IT LI LU MC NL PL PT RO SE SI SK TR**

(30) Priority: **05.12.2003 US 527476 P
17.02.2004 EP 04100622**

(43) Date of publication of application:
**23.08.2006 Bulletin 2006/34**

(73) Proprietor: **Koninklijke Philips Electronics N.V.
5621 BA Eindhoven (NL)**

(72) Inventors:
• **DIMITROVA, Nevenka
5656 AA Eindhoven (NL)**
• **TURETSKY, Robert
5656 AA Eindhoven (NL)**

(74) Representative: **Roche, Denis et al
Philips IP&S France
Société Civile SPID
33 rue de Verdun
BP 313
92156 Suresnes Cedex (FR)**

(56) References cited:
**US-B1- 6 243 676     US-B1- 6 363 380**

• **TURETSKY R; DIMITROVA N: "Screenplay
alignment for closed-system speaker
identification and analysis of feature films" 2004
IEEE INTERNATIONAL CONFERENCE ON
MULTIMEDIA AND EXPO (ICME), vol. 3, June 2004
(2004-06), pages 1659-1662, XP002337438
Piscataway, NJ, USA**
• **HOUGHTON R: "NAMED FACES: PUTTING
NAMES TO FACES" IEEE INTELLIGENT
SYSTEMS, IEEE COMPUTER SOCIETY, LOS
ALAMITOS, CA, US, vol. 14, no. 5, September 1999
(1999-09), pages 45-50, XP000920353 ISSN:
1094-7167**

**Description**

The invention relates to integrative analysis of intrinsic and extrinsic audio-visual information, more specifically it relates to analysis and correlation of features in e.g. a film with features not present in the film but available e.g. through the Internet.

People who are interested in films were for many years obliged to consult books, printed magazines or printed encyclopaedias in order to obtain additional information about a specific film. With the appearance of the Internet, a number of Internet sites were dedicated to film related material. An example is the Internet Movie Database (http://www.imdb.com) which is a very thorough and elaborated net site providing a large variety of additional information to a large number of films. Even though the Internet facilitates access to additional film information, it is up to the user to find his or her way through the vast amount of information available though out the Internet.

With the appearance of the Digital Versatile Disk (DVD) medium, additional information relating to a film is often available in a menu format at the base menu of the DVD film. Often interviews, alternative film scenes, extensive cast lists, diverse trivia, etc. are available. Further the DVD format facilitates scene browsing, plot summaries, bookmarks to various scenes etc. Even though additional information is available on many DVDs, the additional information is selected by the provider of the film, further the additional information is limited by the available space on a DVD disk and it is static information.

The amount of films available and the amount of additional information available concerning the various films, actors, directors, etc. are overwhelming, and users suffer from "information overload". People with interest in films often struggle with problems relating to how they can find exactly what they want, and how to find new things they like. To cope with this problem various systems and methods for searching and analysis of audio-visual data have been developed. Different types of such systems are available, for example systems for automatic summarisation, such a system is described in the US application 2002/0093591. Another type of systems are systems for targeted search based on e.g. selected image data such as an image of an actor in a film, such a system is described in the US application 2003/0107592..

"Named Faces: putting names to faces" (R Houghton, IEEE Intelligent Systems, IEEE Computer Society, Los Alamitos, CA, US, vol. 14, no. 5, September 1999, pages 45-50) discloses a system that automatcally accumulates a database ofpaired names and faces. When users submit images containing a face, the system attempts to return the name for that face. Amongst others, the system extracts and recognizes video caption text and correlates it with a list ofnames extracted from news stories retrieved from web sites..

"Temporal Information in Colleteral Texts for Indexing Movies" (A. Salway et.al., 2002) discloses schemes to annotate the temporal information of an audio description script to moving images.

"A Framework for Aligning and Indexing Movies with their Script" (R. Ronfard et.al., July 6-9, 2003 discloses a framework for extracting structural units, such as shots, scenes, actions and dialogs from the script and aligning them to the movie based on the longest matching subsequence between them.

The inventors have appreciated that a system being capable of integrating intrinsic and extrinsic audio-visual data, such as integrating audio-visual data on a DVD-film with additional information found on the Internet, is ofbenefit and have, in consequence, devised the present invention.

The present invention seeks to provide an improved system for analysis of audio-visual data. Preferably, the invention alleviates or mitigates one or more of the above disadvantages singly or in any combination.

Accordingly there is provided, a system and a method as defined in claims 1 and 9, which are appended to this decription.

An audio-visual system, such as an audio-visual system suitable for home-use, may contain processing means that enables analysis of audio-visual information. Any type of audio-visual system may be envisioned, for example such systems including a Digital Versatile Disk (DVD) unit or a unit capable of showing streamed video, such as video in an MPEG format, or any other type of format suitable for transfer via a data network. The audio-visual system may also be a "set-top"-box type system suitable for receiving and showing audio-visual content, such as TV and film, either via satellite or via cable. The system comprises means for either presenting audio-visual content, i.e. intrinsic content, to a user or for outputting a signal enabling that audio-visual content may be presented to a user. The adjective "intrinsic" should be construed broadly. Intrinsic content may be content that may be extracted form the signal of the film source. The intrinsic content may be the video signal, the audio signal, text that may be extracted from the signal, etc.

The system comprises an intrinsic content analyser. The intrinsic content analyser is typically a processing means capable of analysing audio-visual data. The intrinsic content analyser is communicatively connected to an audio-visual source, such as to a film source. The intrinsic content analyser is by using an extraction algorithm adapted to search the audio-visual source and extract data therefrom.

The system also comprises an extrinsic content analyser. The adjective "extrinsic" should be construed broadly. Extrinsic content is content which is not included in or may not, or only difficulty, be extracted from the intrinsic content. Extrinsic content may typically be such content as film screenplay, storyboard, reviews, analyses, etc. The extrinsic information source may be an Internet site, a data carrier comprising relevant data, etc.

The system also comprises mean for correlating the intrinsic and extrinsic data in a multisource data structure. The rules dictating this correlation may be part of the extraction and/or the retrieval algorithms. A correlation algorithm may also be present, the correlation algorithm correlating the intrinsic and extrinsic data in the multisource data structure. The multisource data structure may be a low-level data structure correlating various types of data e.g. by data pointers. The multisource data structure may not be accessible to a user of the system, but rather to a provider of the system. The multisource data structure is normally formatted into a high-level information structure which is presented to the user of the system.

Intrinsic content may be extracted from the audio-visual source by using a suitable extraction algorithm, extrinsic content may be retrieved from the extrinsic information source. The retrieval of the extrinsic data may be based on the extracted data, however the retrieval of the extrinsic data may also be based data provided to the retrieval algorithm irrespectively of the intrinsic content.

The extraction and/or retrieval algorithm(s) may be a part of the system in the same manner as with many electronic devices that are born with a fixed functionality. However, a module may alternatively provide the extraction and/or retrieval algorithms. It may be advantageous to provide these algorithms by a module since different users may have different preferences and liking in e.g. films and a larger flexibility may thereby be provided. The module may be a hardware module such as an electronic module, e.g., adapted to fit in a slot, however the module may also be a software module, such as a data file on a data carrier, or a data file that may by provided via a network connection.

The system may support the functionality that a query may be provided by a user, the query may be provided to the extraction and/or retrieval algorithms so that the intrinsic and/or extrinsic data is/are extracted in accordance with the query. It may be an advantage to provide this functionality due to the diversity of styles and contents in audio-visual data. A system with a larger flexibility may thereby be provided. The query may be a semantic query, i.e. the query may be formulated using a query language. The query may be selected from a list of queries, e.g. in connection with a query button on a remote control, which when pushed provides to the user a list of possible inquires that may be made.

The audio-visual source may be a film and wherein the extracted intrinsic data may include but is not limited to textual, audio and/or visual features.

The extrinsic information source may be connected to and may be accessed via the Internet. The extrinsic information source may e.g. be general purpose Internet sites such the Internet Movie Database, however the extrinsic information source may also be specific purpose Internet sites, such as Internet sites provided with the specific purpose of providing additional information to systems of the present invention.

The extrinsic information source may be a film screenplay. The finalised film often deviates from the screenplay. The film production process is normally based on the original screenplay and its versions as well as on the development of storyboards. Using this information is like using the recipe book for the movie. High-level semantic information that may not be or is otherwise very difficult to extract from the audio-visual content may be extracted automatically using audio-visual signal processing and analysis of the screenplay and the relevant film. This is advantageous because the external information source may contain data about the film, that is not extractable at all by audio-visual analysis or if it can be extracted then the reliability is very low.

The extrinsic content analyser may include knowledge about screenplay grammar, and wherein the extrinsic data is retrieved using information extracted from the screenplay by use of the screenplay grammar. The actual content of the screenplay generally follows a regular format. By using knowledge of this format, information such as whether a scene is to take place inside or outside, the location, the time of day etc. may be extracted. Extraction of such information based only on the intrinsic data may be impossible, or if possible may be obtained with a very low certainty.

One important aspect of any film, is the identity of persons in a film. Such information may be obtained by correlating the film content with the screenplay, since the screenplay may list all person present in a given scene. By using screenplay grammar, the identity of a person in a scene may be extracted. The identity extracted from the screenplay may e.g. be combined with an audio and/or visual identity marker for example to distinguish several persons in a scene. Any feature that may be extracted from the screenplay may be used in a film analysis that is presented to the user. Other possibilities of what may be extracted and presented to a user are semantic scene delineation and description extraction, film structure analysis, affective (mood) scene analysis, location/time/setting detection, costume analysis, character profile, dialog analysis, genre/sub-genre detection, director style detection etc.

The correlation of the intrinsic and extrinsic data may be a time correlation, and the result may be a multisource data structure where a feature reflected in the intrinsic data is time correlated to a feature reflected in the extrinsic data. The features reflected in the intrinsic and extrinsic data may include but are not limited to textual, audio and/or visual features.

The time correlation may be obtained by an alignment of a dialogue in the screenplay to the spoken text in the film. The spoken text in a film may be contained within the closed captions, it may be extracted from the subtitles, it may be extracted using a speech recognition system, or it may be provided using a different method. But once the spoken text in a film is provided, this spoken text may be compared and matched with the dialogue in the screenplay. The time correlation may provide a timestamped transcript of the film. This comparison and matching may be obtained using e.g. self-similarity matrices.

As mentioned above, a high-level information structure may be generated in accordance with the multisource data structure. The high-level information structure may provide the interface between a user and the various functionalities of the system. The high-level information structure may correspond to a user interface such as present in many electronic devices.

The high-level information structure may be stored on a storage medium. This may be advantageous since it may require considerable data scrutinising to extract the high-level information structure on the background of intrinsic and extrinsic information. Further an updated high-level information structure may be generated, where the updated high-level information structure being an already existing high-level information structure which is updated in accordance with the multisource data structure. This may be advantageous e.g. in situations where the user requests only a limited analysis. Or e.g. in situations where an extrinsic information source has been updated, and it is desirable to update the high-level information structure in accordance with the extrinsic information source.

The content analysis may include results obtained by use of the retrieval algorithm. The content analyses and the retrieval algorithm may be a dynamic algorithm adapted to dynamically include additional functionalities based on retrieved extrinsic data. Thus, the content analysis and retrieval algorithm may be an open algorithm that continuously can learn and update the initial categories (introduce new categories into the system). The additional functionalities may be obtained by training the retrieval algorithm on a set of features from intrinsic data using labels obtained from extrinsic data during the operation of the system after it is deployed in the user's home.

The set of features from intrinsic data may be a specified set of data, it may e.g. be the speaker in a film, where the speaker ID is known e.g. from labelling of the speaker ID by using the present invention. The user may e.g. chose a set of data for use in the training, the set of data being chosen at the convenience of the user. The set of data may also be provided by a provider of a system according to the present invention. The training may be obtained using a neural network, i.e. the retrieval algorithm may e.g. include or be connected to a neural network.

The training may be performed using at least one screenplay. Thus, the training may be performed by choosing the set of data to be at least one screenplay. It is an advantage to be able to train the system to support new features since e.g. new actors appear, unknown actors may become popular, the liking of people is different, etc. In this way a more flexible and powerful system may be provided. The training of system may also be blind training facilitating classification for objects and semantic concepts in video understanding.

The multisource data structure may be used to provide an automatic ground truth identification in a film, this may be used in benchmarking algorithms on audio-visual content. Also automatic labelling in a film may be obtained based on the multisource data structure. It is an advantage to automatically to be able to handle film content.

Yet another application is audio-visual scene content understanding using the textual description in the screenplay and using the audio-visual features from the video content. A system may be provided that is trained to assign low-level and mid-level audio/visual/features to the word descriptions of the scene. The training may be done using Support Vector Machines or Hidden-Markov Models. The classification may be based only on audio/visual/text features.

By using the textual description in the screenplay an automatic scene content understanding may be obtained. Such an understanding may be impossible to extract from the film itself.

These and other aspects, features and/or advantages ofthe invention will be apparent from and elucidated with reference to the embodiments described hereinafter.

Preferred embodiments ofthe invention will now be described in details with reference to the drawings in which:

Fig. 1 is a high-level structure diagram of an embodiment ofthe present invention,
Fig. 2 is schematic diagram of another embodiment of the present invention, this embodiment being a sub-embodiment ofthe embodiment described in connection with Fig. 1,
Fig. 3 is a schematic illustration of alignment ofthe screenplay and the closed captions, and
Fig. 4 is a schematic illustration of speaker identification in a film.

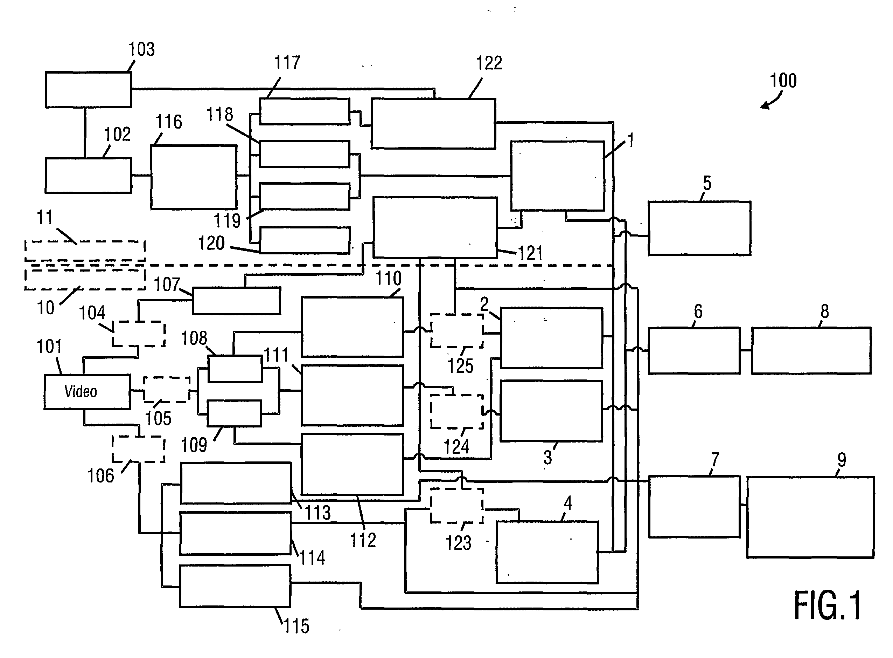

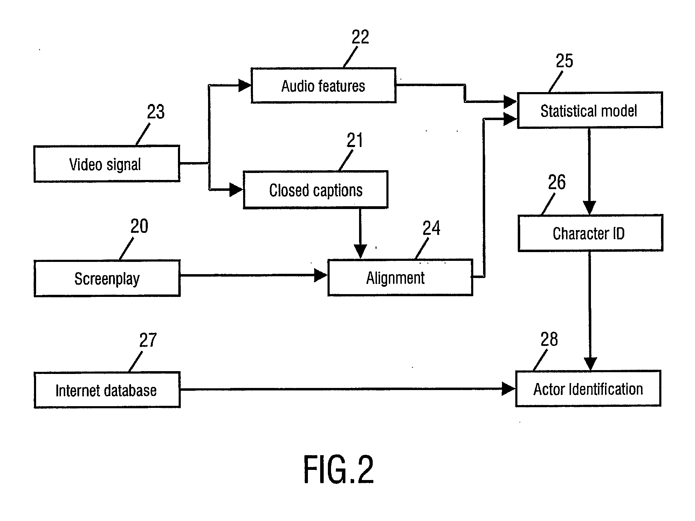

Fig. 1 illustrates a high-level diagram ofa preferred embodiment ofthe present invention. A specific embodiment in accordance with this high-level diagram is presented in Fig. 2.

Table 1

| Number | Name |
|--------|------|
| 1. | Text based scene |
| 2. | Audio based actor indentification |
| 3. | Audio based scene description |

(continued)

| Number | Name |
|---|---|
| 4. | Face based actor identification |
| 5. | Super model for actor ID |
| 6. | Plot point detection |
| 7. | Establishing shot detection |
| 8. | Compressed plot summary |
| 9. | Scene boundary detection, Semantic scene description |
| 10. | Intrinsic resources |
| 11. | Extrinsic resources |
| 101. | Video |
| 102. | Screenplay |
| 103. | Internet |
| 104. | Subtitle |
| 105. | Audio |
| 106. | Video |
| 107. | Timestamp |
| 108. | MFCC |
| 109. | Pitch |
| 110. | Speaker turn detection |
| 111. | Emotive audio context |
| 112. | Speech/music/SFX segmentation |
| 113. | Histogram Scene bound. |
| 114. | Face detection |
| 115. | Videotext detection |
| 116. | High level structural parsing |
| 117. | Character |
| 118. | Scene loc. |
| 119. | Scene desc. |
| 120. | Dialogue |
| 121. | Text based timestamped screenplay |
| 122. | X-ref character names w/actor |
| 123. | Face models |
| 124. | Emotive models |
| 125. | Voice models |

The diagram 100 presented in Fig. 1 illustrates a model for integrated analysis of extrinsic and intrinsic audio-visual information according to the present invention. The names of the components are provided in Table 1. In the figure intrinsic audio-visual information is exemplified by a video film 101, i.e. a feature film on a data carrier such as a DVD disk. The intrinsic information is such information as information that may be extracted from the audio-visual signal, i.e. from image data, audio data and/or transcript data (in the form of subtitles or closed captions or teletext transcript). The extrinsic audio-visual information is here exemplified by extrinsic access to the screenplay 102 of the film, for example via an Internet connection 103. Further, extrinsic information may also be the storyboard, published books, additional scenes from the film, trailers, interviews with e.g. director and/or cast, film critics, etc. Such information may be obtained through an Internet connection 103. These further extrinsic information may like the screenplay 102 undergo high level structural parsing 116. The accentuation of the screenplay in the box 102 is an example, any type of extrinsic information, and especially the types of extrinsic information mentioned above, may in principle be validly inserted in the diagram in the box 102.

As a first step the intrinsic information is processed using an intrinsic content analyser. The intrinsic content analyser may be a computer program adapted to search and analyse intrinsic content of a film. The video content may be handled along three paths (104, 105, 106). Along path 1 spoken text is extracted from the signal, the spoken text is normally represented by the subtitles 104. The extraction includes speech to text conversion, closed caption extraction from the user data of MPEG and/or teletext extraction either from the video signal or from a Web page. The output is a timestamped transcript 107. Along path 2 the audio 105 is processed. The audio-processing step includes audio feature extraction followed by audio segmentation and classification. The Mel Frequency Cepstral Coefficients (MFCCs) 108 may be used to detect the speaker turn 110 as well as form part of a determination of the emotive context. The mel-scale is a frequency-binning method which is based on the ear's frequency resolution. By the use of frequency bins on the mel-scale MFCCs are computed so as to parameterise speech. The MFCCs are good indicators of the discrimination of the ear. Accordingly, MFCCs can be used to compensate distortion channels through implementation of equalisation by subtraction in a cepstral domain, as opposed to multiplication in a spectral domain. The pitch 109 may also form part of a determination of the emotive context, whereas the pitch may also be used in segmentation with respect to speech, music and sound effects 112. The speaker turn detection 110, the emotive audio context 111 and the speech/music/SFX segmentation 112 are coupled through voice models and emotive models into audio based classification of the actor identification 2 and a scene description 3. Along path 3 the video image signal 106 is analysed. This visual processing includes visual features extraction such as colour histograms 113, face detection 114, videotext detection 115, highlight detection, mood analysis, etc. The face detection is coupled through a face model to face-based actor identification 4. Colour histograms are histograms representing the colour value (in a chosen colour space) and the frequency of their occurrence in an image.

As a second step the extrinsic information is processed using an extrinsic content analyser. The extrinsic content analyser may be adapted to search the extrinsic information based on the extracted intrinsic data. The extracted intrinsic data may be as simple as the film title, however the extracted intrinsic data may also be a complex set of data relating to the film. The extrinsic content analyser may include models for screenplay parsing, storyboard analysis, book parsing, analysis of additional audio-visual materials such as interviews, promotion trailers etc. The output is a data structure that encodes high-level information about scenes, cast mood, etc. As an example, a high level structural parsing 116 is performed on the screenplay 102. The characters 117 are determined and may be cross-referenced with actors e.g. through information accessed via the Internet, e.g. by consulting an Internet based database such as the Internet Movie Database. The scene location 118 and the scene description 119 are used in a text based scene description 1, and the dialogue 120 is correlated with the timestamped transcript to obtain a text based timestamped screenplay. The text based timestamped screenplay will provide approximate boundaries for the scenes based on the timestamps for the dialogue in the text based scene description 1.

Having established a cross-reference between character names and actors 120, a text based scene description 1, a text based time stamped screenplay 121, an audio based actor identification 2, an audio based scene description 3 and a face based actor identification, a multisource alignment may be performed. Thus the intrinsic and extrinsic data may be correlated in order to obtain a multisource data structure. Some of the external documents such as the screenplay does not contain time information, by correlating the extrinsic and intrinsic data timestamped information extracted from the intrinsic audio-visual signal may be aligned with the information provided from the external sources. The output is a very detailed multisource data structure which contains superset of information available from both extrinsic and intrinsic sources.

Using the multisource data structure a high-level information structure may be generated. In the present embodiment the high-level information structure is made up of three parts: a supermodel for actor ID 5, a compressed plot summary 8 and a scene boundary detection and description which may provide a semantic scene description 9. The supermodel for actor ID module may include audio-visual person identification in addition to character identification from the multisource data structure. Thus the user may be presented with a listing of all the actors appearing in the film, and may e.g. by selecting an actor be presented with additional information concerning this actor, such as other films in which the actor appear or other information about a specific actor or character. The compressed plot summary module may include plot points and story and sub-story arcs. These are the most interesting points in the film. This high-level information is very important for the summarisation. The user may thereby be presented with a different type of plot summary than what is typically provided on the DVD, or may chose the type of summary that the user is interested in. In the semantic scene detection, shots for scenes and scene boundaries are established. The user may be presented with a complete list of scenes and correspondent scene from the screenplay e.g. in order to compare the director's interpretation of the screenplay for various scenes, or to allow the user to locate scenes containing a specific character.

In the following embodiment focus is on alignment of the screenplay to the film.

Almost all feature-length films are produced with the aid of a screenplay. The screenplay provides a unified vision of the story, setting, dialogue and action of a film - and gives the filmmakers, actors and crew a starting point for bringing their creative vision to life. For those involved in content-based analysis of movies, the screenplay is a currently untapped resource for obtaining a textual description of important semantic objects within a film. This has the benefit not only of bypassing the problem of the semantic gap (e.g. converting an audio-visual signal into a series of text descriptors), but of having said descriptions come straight from the filmmakers. The screenplay is available for thousands of films and follows a semi-regular formatting standard, and thus is a reliable source of data.

The difficulty in using the screenplay as a shortcut to content-based analysis is twofold. First, there is no inherent correlation between text in the screenplay and a time period in the film. To counter this limitation, the lines of dialogue from the screenplay is aligned with the timestamped closed caption stream extracted from the film's DVD. The other obstacle that is faced is that in many cases, the screenplay is written *before* production of the film, so lines of dialogue or entire scenes can be added, deleted, modified or shuffled. Additionally, the text of the closed-captions is often only an approximation of the dialogue being spoken by the characters onscreen. To counter these effects, it is imperative to use an alignment method which is robust to scene/dialogue modifications. Our experiments show that only approximately 60% of the lines of dialogue can be timestamped within a film. The timestamped dialogues found by the alignment process may however nevertheless be used as labels for statistical models which can estimate descriptors that were not found. What this amounts to is a self-contained, unsupervised process for the labelling of semantic objects for automatic video content analysis of movies and any video material that comes with a "recipe" for making it.

We have to note here that an alternative to the screenplay is the continuity script. The continuity script is written after all work on a film is completed. The term continuity script is often taken in two contexts — first, a shot-by-shot breakdown of a film, which includes, in addition to the information from the screenplay, camera placement and motion. Additionally, continuity script can also refer to an exact transcript of the dialogue of a film. Both forms can be used by closed-captioning agencies. Although continuity scripts from certain films are published and sold, they are generally not available to the public online. This motivates analysis on the shooting script i.e. screenplay, despite its imperfections.

One reason why the screenplay has not been used more extensively in content-based analysis is because the dialogues, actions and scene descriptions present in a screenplay do not have a timestamp associated with them. This hampers the effectiveness in assigning a particular segment of the film to a piece of text. Another source of film transcription, the closed captions, has the text of the dialogue spoken in the film, but it does not contain the identity of characters speaking each line, nor do closed captions possess the scene descriptions which are so difficult to extract from a video signal. We get the best of both worlds by aligning the dialogues of screenplay with the text of the film's closed captions.

Second, lines and scenes are often incomplete, cut or shuffled. In order to be robust in the face of scene re-ordering alignment of the screenplay to the closed captions may be done one scene at a time. This also eases the otherwise memory-intensive creation of a full self-similarity matrix.

Finally, as it may be impossible to find correlates in the screenplay for every piece of dialogue. It becomes imperative to take information extracted from the timestamped screenplay, combined with multimodal segments of the film (audio/video stream, closed captions, information from external websites such as imdb.com), to create statistical models of events. These events can either be inter- or intra-film, and promise the ability to provide textual descriptions from scenes which descriptions are not explicitly found by the aligned stream.

An important aspect of screenplay alignment is identification of the speaker. Having access to the character speaking at any given time will allow for applications that provide links to external data about an actor and intra-film queries based on voice presence. Unsupervised speaker identification on movie dialogue is a difficult problem as speech characteristics are affected by changes in emotion of the speaker, different acoustic conditions in different actual or simulated locations (e.g. "room tone"), as well as by the soundtrack, ambient noise and heavy activity in the background.

Our solution is to provide the timestamps from the alignment as labeled examples for a "black box" classifier learning the characteristics of the voice under different environments and emotions. In essence, by having a large amount of training data from the alignment we are able to "let the data do the talking" and our method is purely unsupervised as it does not require any human pre-processing once the screenplay and film audio are captured in a machine-readable form.

After the principal shooting of a film is complete, the editors assemble the different shots together in a way that may or may not respect the screenplay. Sometimes scenes will be cut or pickup shoots requested if possible in the name pacing, continuity or studio politics. As an extreme example, the ending of film *Double Indemnity,* with the main character in the gas chamber, was left on the cutting room floor. *Swingers* was originally intended to be a love story until the editor tightened up the pace of the dialogue and turned the film into a successful comedy.

The actual content of the screenplay generally follows a regular format. For example the first line of any scene or shooting location is called a *slug line.* The slug line indicates whether a scene is to take place inside or outside, the name of the location, and can potentially specify the time of day. The slug line is an optimistic indicator for a scene boundary, as it is possible that a scene can take place in many locations. Following the slug line is a description of the location. The description will introduce any new characters that appear and any action that takes place without dialogue.

The bulk of the screenplay is the dialogue description. Dialogue is indented in the page for ease of reading and to give actors and filmmakers a place for notes. If the screenwriter has direction for the actor that is not obvious from the dialogue, it can be indicated in the description. Standard screenplay format may be parsed with the grammar rules:

```
SCENE_START:              .* | SCENE_START | DIAL_START | SLUG | TRANSITION
DIAL_START:     \t+ <CHAR NAME> (V.O.|O.S.)? \n
                \t+ DIALOGUE | PAREN
DIALOGUE:       \t+ .*? \n\n
PAREN:          \t+ (.*?)
TRANSITION: ,        \t+ <TRANS NAME> :
SLUG:                <SCENE #>?. <INT/EXT><ERNAL|.>? - <LOC> <- TIME>?
```

In this grammar, "\n" means newline character, "\t" refers to tab. ".*?" is a term from Perl's regular expressions, an it means "any amount of anything before the next pattern in a sequence is matched". A question mark followed by a character means that the character may or may not be present. "|" allows for choices — for example <O.S. | V.O.> means that the presence of O.S. or V.O. will contribute towards a good match. Finally, the "+" means that we will accept one or more of the previous character to still be considered a match — e.g. a line starting with "\tHello", "\t\t Hello" or "\t\t\tHello" can be a dialogue, though a line starting with "Hello" will not.

The formatting guide for screenplays is only a suggestion and not a standard. However, it is possible to capture the most screenplays available with simple but flexible regular expressions.

Hundreds of copies of a screenplay are produced for any film production of scale. The screenplay can be reproduced for hobbyist or academic use, and thousands of screenplays are available online.

A system overview which includes pre-processing, alignment and speaker identification throughout a single film, is shown in Fig. 2.

The text of a film's screenplay 20 is parsed, so that scene and dialogue boundaries and metadata are entered into a uniform data structure. The closed caption 21 and audio features 22 are extracted from the film's video signal 23. In a crucial stage, the screenplay and closed caption texts are aligned 24. This alignment is elaborated upon below. In the alignment the dialogues are timestamped and associated with a particular character. However, as it may be impossible to find correlates in the screenplay for every piece of dialogue. It becomes imperative to take information extracted from the timestamped screenplay, combined with multimodal segments of the film (audio/video stream, closed captions, information from external websites), to create statistical models 25 of events.

In this way it is possible to achieve very high speaker identification accuracy in the movie's naturally noisy environment. It is important to note that this identification may be performed using supervised learning methods, but the ground truth is generated automatically so there is no need for human intervention in the classification process.

Thus the character speaking at anytime during the film may be determined 26. This character ID may be correlated with an Internet database 27 in order to obtain actor identification 28 of the characters in a film.

In addition to the speaker identification, also the location and time and description of a scene, the individual lines dialogue and their speaker, and the parenthetical and action direction for the actors, and any suggestion transition (cut fade, wipe, dissolve, etc) between scenes may be extracted.

For the alignment and speaker identification tasks, the audio and closed caption stream from the DVD of a film is required.

The User Data Field of the DVD contains a subtitle stream in text format, it is not officially part of the DVD standard and is thus not guaranteed to be present on all disks. For films without available subtitle information, the alternative is to obtain closed captions by performing OCR (optical character recognition) on the subtitle stream of the DVD. This is a semi-interactive process, which requires user intervention only when a new font is encountered (which is generally once per production house), but is otherwise fully self-contained. The only problem we have encountered is that sometimes the lowercase letter '1' is confused with the uppercase letter 'I', we have found that it is necessary to warp all L's to I's in order to avoid confusion while comparing words. OCR may be performed using the SubRip program, and provides timestamps with millisecond resolution for each line of closed captions.

The screenplay dialogues and closed caption text are aligned by using dynamic programming to find the "best path" across a self-similarity matrix. Alignments that properly correspond to scenes are extracted by applying a median filter across the best path. Dialogue segments of reasonable accuracy are broken down into closed caption line sized chunks, which means that we can directly translate dialogue chunks into timestamped segments. Below, each component is discussed.

The similarity matrix is a way of comparing two different versions of similar media. It is an extension of the self-similarity matrix, which is now a standard tool in content-based analysis of audio.

In the similarity matrix, every word i of a scene in the screenplay is compared to every word j in the closed captions of the entire movie. A matrix is thus populated:

$$SM(i, j) \leftarrow screenplay(scene\_num, i) == subtitle(j)$$

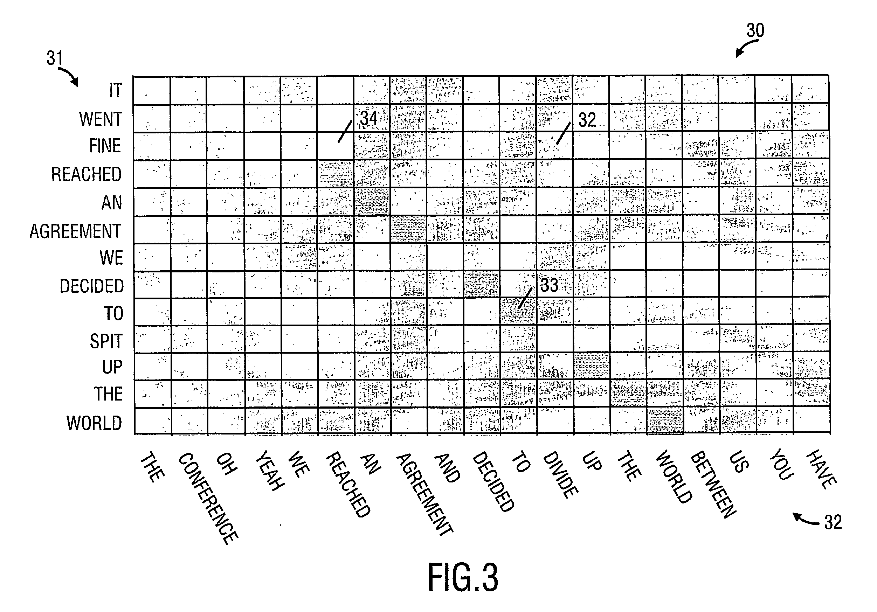

In other words, SM(i,j)=1 if word i of the scene is the same as word j of the closed captions, and SM(i,J)=0 if they are different. Screen time progresses linearly along the diagonal i=j, so when lines of dialogue from the screenplay line up with lines of text from the closed captions, we expect to see a solid diagonal line of 1's. Figure 3 shows an example segment of a similarity matrix 30 for the comparison of the closed captions 31 and the screenplay 32 for scene 87 of the film "Wall Street". In the similarity matrix word appearing in the screenplay and in the closed captions may be characterised according to whether a mach is found. Thus every matrix element may be label as a mismatch 32 if no match is found, as a match 33 if a match is found. Naturally many coincidence matches may be found, but a discontinuous track may be found and a best path through this track is be established. The words being on this best track that do not match, may be labelled accordingly 34.

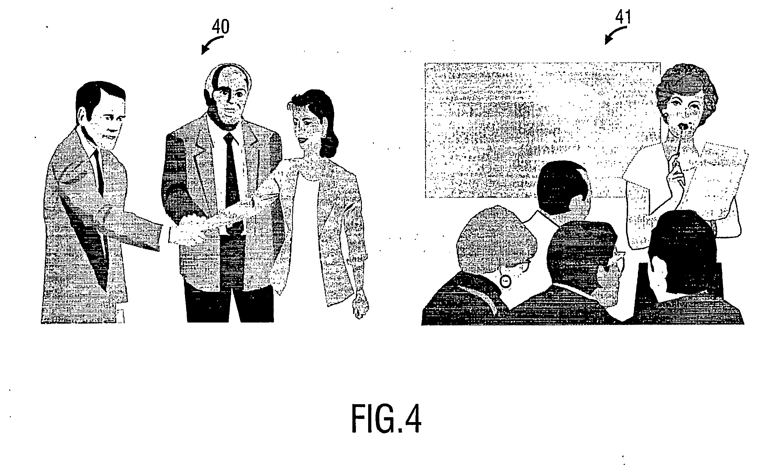

Speaker recognition in movies is hard because the voice changes and the acoustic conditions change throughout the duration of the movie. Thus a lot of data may be needed in order to classify under different conditions. Figure 4 illustrates this particular problem. Two scenes 40, 41 are schematically illustrated. In the first scene 40, three people are present. These three people are all facing the viewer and can be expected to speak one at the time. Thus, by using only intrinsic data, it may be possible to extract the speaker identity with high certainty, e.g. by use of voice fingerprints and face models. In the second scene 41, five persons are present, and only one is facing the viewer and a lot of discussion may be present, people may all speak at once, and dramatic background music may be used to underline an intense mood. By using intrinsic information it may not be possible to perform a speaker identification. However, by using the screenplay where the dialogue as well as the speakers are indicated, speaker ID can be applied to detect all the speakers in the scene.

In order to classify and facilitate speaker recognition based on audio features, the following procedure may be used:

1) choose training/test/validation set
2) remove silence
3) potentially remove music/noisy sections based on an audio classifier
4) downsample to 8 kHz, as the peak frequency for speech is approximately 3.4 kHz
5) compute CMS, delta features on 50 msec windows, with a hop size of 12.5 msec
6) stack feature vectors together, to create a long analysis frame
7) perform PCA to reduce dimensionality of test set
8) train neural net or GMM
9) simulate net/GMM on the entire movie
10) compare with ground truth

It will be apparent to a person skill in the art that the invention may also be embodied as a computer programme product, storable on a storage medium and enabling a computer to be programmed to execute the method according to the invention.

The computer can be embodied as a general purpose computer like a personal computer or network computer, but also as a dedicated consumer electronics device with a programmable processing core.

In the foregoing, it will be appreciated that reference to the singular is also intended to encompass the plural and vice versa. Moreover, expressions such as "include", "comprise", "has", "have", "incorporate", "contain" and "encompass" are to be construed to be non-exclusive, namely such expressions are to be construed not to exclude other items being present.

Although the present invention has been described in connection with preferred embodiments, it is not intended to be limited to the specific form set forth herein. Rather, the scope of the present invention is limited only by the accompanying claims.

**Claims**

1. A system (100) for integrative analysis of film (10) and screenplay (11) data, the system comprising:

a film analyser, the film analyser being communicatively connected to a film (23), the film analyser being adapted to search the film for spoken text (21,22) and being adapted to extract lines of spoken text using an extraction algorithm, **characterised in that** the system further comprises:

a screenplay analyser, the screenplay analyser being communicatively connected to a screenplay (20), the screenplay analyser being adapted to search the screenplay and being adapted to retrieve lines of dialogue in the screenplay using a retrieval algorithm, wherein the screenplay analyser is configured to retrieve the lines of dialogue based on knowledge about screenplay grammar,

means for time correlation by time aligning respective lines of dialogue retrieved from the screenplay to respective lines of spoken text extracted from the film, and providing a timestamped transcript (24) of the film, where the respective lines of spoken text extracted from the film are correlated to the respective lines of dialogue retrieved from the screenplay, wherein the system is configured to identify a character (26) as the one who speaks a particular line of spoken text that has been aligned to a line of dialogue retrieved from the screenplay, the character being identified from information in the timestamped transcript regarding characters involved in the dialogue, and

means for determining characteristics of the voice of a character based on audio features in the film that coincide with lines of spoken text extracted from the film that have been aligned to lines of dialogues retrieved from the screenplay, and using the determined characteristics for identifying the character as the one who speaks a particular line of spoken text extracted from the film that could not be aligned to a line of dialogue retrieved from the screenplay.

2. A system according to claim 1, wherein the spoken text is a timestamped closed caption stream (21).

3. A system according to claim 2 configured to obtain the closed captions by performing optical character recognition on a subtitle stream of the film.

4. A system according to claim 1, wherein the film analyser is adapted to extract the spoken text in accordance with a query, the query being provided by a user.

5. A system according to claim 1, wherein the screenplay analyser is adapted to retrieve the screenplay dialogue lines in accordance with a query, the query being provided by a user.

6. A system according to claim 1, wherein the screenplay is connected to and may be accessed via the Internet (103).

7. A system according to claim 1, wherein the system is configured to correlate an identifier of the speaking character (26) with an Internet database in order to obtain actor identification of the characters in the film.

8. A system according to claim 1, wherein the system is configured to compare the dialogue lines in the screenplay (20) with the lines of spoken text in the film by means of a self-similarity matrix (30).

9. A computer implemented method for integrative analysis of film and screenplay data, the method comprising the step of:

searching a film (23) for spoken text and extracting lines of spoken text using an extraction algorithm, **characterised in that** the method further comprises the steps of:

searching a screenplay (20) and retrieving lines of dialogue in the screenplay using a retrieval algorithm, wherein the lines of dialogue are retrieved based on knowledge about screenplay grammar,

time aligning respective lines of dialogue retrieved from the screenplay to respective lines of spoken text extracted from the film, and providing a timestamped transcript (24) of the film, where the respective lines of spoken text extracted from the film are correlated to the respective lines of dialogue in the screenplay,

identifying a character (26) as the one who speaks a particular line of spoken text that has been aligned to a line of dialogue retrieved from the screenplay, the character being identified from information in the timestamped transcript regarding characters involved in the dialogue,

and

determining characteristics of the voice of a character based on audio features in the film that coincide with lines of spoken text extracted from the film that have been aligned to lines of dialogues retrieved from the screenplay, and using the determined characteristics for identifying the character as the one who speaks a particular line of spoken text extracted from the film that could not be aligned to a dialogue retrieved from the screenplay.

**10.** Computer program product enabling a computer to be programmed to perform the method according to claim 9.

**11.** Storage medium carrying the computer programme product according to claim 10.

**Patentansprüche**

**1.** System (100) zur integrativen Analyse von Film- (10) und Drehbuch- (11) Daten, wobei das System umfasst:

einen Film-Analysator, wobei der Film-Analysator mit einem Film (23) kommunikativ in Verbindung steht, wobei der Film-Analysator so eingerichtet ist, dass er den Film zum gesprochenen Text (21, 22) sucht und unter Verwendung eines Extraktionsalgorithmus Zeilen des gesprochenen Textes extrahiert, **dadurch gekennzeichnet, dass** das System weiterhin umfasst:

einen Drehbuch-Analysator, wobei der Drehbuch-Analysator mit einem Drehbuch (20) kommunikativ in Verbindung steht, wobei der Drehbuch-Analysator so eingerichtet ist, dass er das Drehbuch sucht und Dialogzeilen in dem Drehbuch unter Verwendung eines Abrufalgorithmus abruft, wobei der Drehbuch-Analysator so konfiguriert ist, dass er die Dialogzeilen aufgrund von Kenntnissen über Drehbuchgrammatik abruft,
Mittel zur Zeitkorrelation durch zeitliches Anpassen jeweiliger aus dem Drehbuch abgerufener Dialogzeilen an jeweilige Zeilen des aus dem Film extrahierten, gesprochenen Textes sowie Vorsehen eines mit Zeitstempel versehenen Transkripts (24) des Films, bei dem die aus dem Film extrahierten, jeweiligen Zeilen des gesprochenen Textes mit den aus dem Drehbuch abgerufenen, jeweiligen Dialogzeilen korrespondieren, wobei das System so konfiguriert ist, dass es eine Figur/Rolle (26) als denjenigen identifiziert, der eine bestimmte Zeile des gesprochenen Textes spricht, die an eine aus dem Drehbuch abgerufene Dialogzeile angepasst wurde, wobei die Figur anhand von Informationen in dem mit Zeitstempel versehenen Transkript in Bezug auf in dem Dialog vorkommende Figuren/Rollen identifiziert wird, sowie
Mittel zum Ermitteln von Charakteristiken der Stimme einer Figur aufgrund von Audiomerkmalen in dem Film, die mit aus dem Film extrahierten Zeilen des gesprochenen Textes, die an aus dem Drehbuch abgerufene Dialogzeilen angepasst wurden, koinzidieren, sowie Verwenden der ermittelten Charakteristiken zum Identifizieren der Figur/Rolle als denjenigen, der eine bestimmte, aus dem Film extrahierte Zeile des gesprochenen Textes spricht, die nicht an eine aus dem Drehbuch abgerufene Dialogzeile angepasst werden konnte.

**2.** System nach Anspruch 1, wobei es sich bei dem gesprochenen Text um eine mit Zeitstempel versehene Ablauffolge (21) geschlossener Untertitel handelt.

**3.** System nach Anspruch 2, das so konfiguriert ist, dass es die geschlossenen Untertitel durch Durchführen einer optischen Rollenerkennung bei einem Untertitel-Strom des Films erhält.

**4.** System nach Anspruch 1, wobei der Film-Analysator so eingerichtet ist, dass er den gesprochenen Text auf eine Anfrage hin extrahiert, wobei die Anfrage von einem Benutzer bereitgestellt wird.

**5.** System nach Anspruch 1, wobei der Drehbuch-Analysator so eingerichtet ist, dass er die Drehbuchdialogzeilen auf eine Anfrage hin abruft, wobei die Anfrage von einem Benutzer bereitgestellt wird.

**6.** System nach Anspruch 1, wobei das Drehbuch mit dem Internet (103) verbunden ist und über dieses auf das Drehbuch zugegriffen werden kann.

**7.** System nach Anspruch 1, wobei das System so konfiguriert ist, dass es als Identifizierer der Sprechrolle (26) einer Internet-Datenbank zugeordnet ist, um eine Darstelleridentifizierung der Rollen in dem Film zu erhalten.

**8.** System nach Anspruch 1, wobei das System so konfiguriert ist, dass es die Dialogzeilen in dem Drehbuch (20) mit den Zeilen des gesprochenen Textes in dem Film mit Hilfe einer Selbstähnlichkeitsmatrix vergleicht.

**9.** Computerimplementiertes Verfahren zur integrativen Analyse von Film- und Drehbuch-Daten, wobei das Verfahren einen Schritt umfasst, wonach:

ein Film (23) zum gesprochenen Text gesucht wird und Zeilen des gesprochenen Textes unter Verwendung eines Extraktionsalgorithmus extrahiert werden, **dadurch gekennzeichnet, dass** das Verfahren weiterhin die folgenden Schritte umfasst, wonach:

ein Drehbuch (20) gesucht wird und Dialogzeilen in dem Drehbuch unter Verwendung eines Abrufalgorithmus abgerufen werden, wobei die Dialogzeilen aufgrund von Kenntnissen über Drehbuchgrammatik abgerufen werden,
jeweilige, aus dem Drehbuch abgerufene Dialogzeilen an jeweilige Zeilen des aus dem Film extrahierten, gesprochenen Textes zeitlich angepasst werden und ein mit Zeitstempel versehenes Transkript (24) des Films vorgesehen wird, bei dem die aus dem Film extrahierten, jeweiligen Zeilen des gesprochenen Textes mit den jeweiligen Dialogzeilen in dem Drehbuch korrelieren,
eine Figur/Rolle (26) als derjenige identifiziert wird, der eine bestimmte Zeile des gesprochenen Textes spricht, die an eine aus dem Drehbuch abgerufene Dialogzeile angepasst wurde, wobei die Figur/Rolle anhand von Informationen in dem mit Zeitstempel versehenen Transkript in Bezug auf in dem Dialog vorkommende Figuren/Rollen identifiziert wird, und
Charakteristiken der Stimme einer Figur/Rolle aufgrund von Audiomerkmalen in dem Film ermittelt werden, die mit aus dem Film extrahierten Zeilen des gesprochenen Textes, die an aus dem Drehbuch abgerufene Dialogzeilen angepasst wurden, koinzidieren, und wobei die ermittelten Charakteristiken zum Identifizieren der Figur/Rolle als denjenigen, der eine bestimmte, aus dem Film extrahierte Zeile des gesprochenen Textes spricht, die nicht an eine aus dem Drehbuch abgerufene Dialogzeile angepasst werden konnte, verwendet werden.

**10.** Computerprogrammprodukt, das einen Computer befähigt, so programmiert zu werden, dass er das Verfahren nach Anspruch 9 durchführt.

**11.** Speichermedium zur Speicherung des Computerprogrammprodukts nach Anspruch 10.

**Revendications**

**1.** Système (100) qui est destiné à une analyse d'intégration de données d'un film (10) et d'un scénario (11), le système comprenant :

un analyseur de films, l'analyseur de films étant connecté de façon communicative à un film (23), l'analyseur de films étant adapté de manière à rechercher le film pour un texte parlé (21, 22) et étant adapté de manière à extraire des lignes d'un texte parlé en utilisant un algorithme d'extraction, **caractérisé en ce que** le système comprend en outre :

un analyseur de scénarios, l'analyseur de scénarios étant connecté de façon communicative à un scénario (20), l'analyseur de scénario étant adapté de manière à rechercher le scénario et étant adapté de manière à récupérer des lignes d'un dialogue dans le scénario en utilisant un algorithme de récupération dans lequel l'analyseur de scénarios est configuré de manière à récupérer les lignes du dialogue sur la base de la connaissance de la grammaire scénario,
des moyens qui sont destinés à une corrélation temporelle par un alignement temporel des lignes respectives du dialogue, qui est récupéré à partir du scénario, à des lignes respectives du texte parlé qui est extrait du film, et par la fourniture d'une transcription horodatée (24) du film où les lignes respectives du texte parlé, qui est extrait du film, sont corrélées avec les lignes respectives du dialogue qui est récupéré à partir du scénario dans lequel le système est configuré de manière à identifier un personnage (26) en tant que celui qui énonce une ligne particulière du texte parlé qui a été alignée à une ligne du dialogue qui est récupéré du scénario, le personnage étant identifié à partir de l'information dans la transcription horodatée en ce qui concerne des personnages qui sont liés au dialogue, et
des moyens pour déterminer des caractéristiques de la voix d'un personnage sur la base des particularités caractéristiques audio dans le film qui coïncident avec des lignes du texte parlé, étant extrait du film, qui ont été alignées à des lignes des dialogues étant récupérés à partir du scénario et pour utiliser les caractéristiques déterminées afin d'identifier le personnage en tant que celui qui énonce une ligne particulière du texte parlé, étant extrait du film, qui ne pourrait pas être alignée à une ligne du dialogue qui est récupéré du scénario.

2. Système selon la revendication 1, dans lequel le texte parlé est un flux de sous-titrages fermés horodatés (21).

3. Système selon la revendication 2 qui est configuré de manière à obtenir les sous-titrages fermés en exécutant une reconnaissance optique du personnage sur un flux de sous-titres du film.

4. Système selon la revendication 1, dans lequel l'analyseur de films est adapté de manière à extraire le texte parlé selon une requête, la requête étant fournie par un utilisateur.

5. Système selon la revendication 1, dans lequel l'analyseur de scénarios est adapté de manière à récupérer les lignes du dialogue à partir du scénario selon une requête, la requête étant fournie par un utilisateur.

6. Système selon la revendication 1, dans lequel le scénario est connecté à et peut être consulté par le biais de Internet (103).

7. Système selon la revendication 1, dans lequel le système est configuré de manière à corréler un identificateur du personnage parlant (26) avec une base de données Internet afin d'obtenir l'identification de l'acteur des personnages dans le film.

8. Système selon la revendication 1, dans lequel le système est configuré de manière à comparer les lignes du dialogue dans le scénario (20) aux lignes du texte parlé dans le film au moyen d'une matrice de similarité automatique (30).

9. Procédé mis en oeuvre par ordinateur qui est destiné à une analyse d'intégration de données d'un film et d'un scénario, le procédé comprenant l'étape suivante consistant à :

rechercher un film (23) pour le texte parlé et à extraire des lignes du texte parlé en utilisant un algorithme d'extraction, **caractérisé en ce que** le procédé comprend en outre les étapes suivantes consistant à :

rechercher un scénario (20) et à récupérer des lignes du dialogue dans le scénario en utilisant un algorithme de récupération dans lequel les lignes du dialogue sont récupérées sur la base de la connaissance de la grammaire scénario,
aligner en temps des lignes respectives du dialogue, qui est récupéré à partir du scénario, à des lignes du texte parlé qui est extrait du film, et à fournir une transcription horodatée (24) du film où les lignes respectives du texte parlé, qui est extrait du film, sont corrélées avec les lignes respectives du dialogue dans le scénario, identifier un personnage (26) en tant que celui qui énonce une ligne particulière du texte parlé qui a été alignée à une ligne du dialogue qui est récupéré du scénario, le personnage étant identifié à partir de l'information dans la transcription horodatée en ce qui concerne des personnages qui sont liés au dialogue, et déterminer des caractéristiques de la voix d'un personnage sur la base des particularités caractéristiques audio dans le film qui coïncident avec des lignes du texte parlé, étant extrait du film, qui ont été alignées à des lignes des dialogues étant récupérés à partir du scénario et pour utiliser les caractéristiques déterminées afin d'identifier le personnage en tant que celui qui énonce une ligne particulière du texte parlé, étant extrait du film, qui ne pourrait pas être alignée à une ligne du dialogue qui est récupéré à partir du scénario.

10. Produit de programme informatique permettant à un ordinateur d'être programmé de manière à mettre en oeuvre le procédé selon la revendication 9.

11. Support de stockage contenant le produit de programme informatique selon la revendication 10.

FIG.1

FIG.2

EP 1 692 629 B1

FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020093591 A

- US 20030107592 A

### Non-patent literature cited in the description

- **R Houghton.** Named Faces: putting names to faces. *IEEE Intelligent Systems, IEEE Computer Society,* vol. 14 (5), 45-50
- **A. Salway.** *Temporal Information in Colleteral Texts for Indexing Movies,* 2002

- **R. Ronfard.** *A Framework for Aligning and Indexing Movies with their Script,* 06 July 2003